# EUROPÄISCHE PATENTSCHRIFT

(11) **EP 1 445 078 B1**
(45) Veröffentlichungstag und Bekanntmachung des Hinweises auf die Patenterteilung: **16.08.2006**
(21) Anmeldenummer: 04002049.7
(22) Anmeldetag: 30.01.2004
(51) Int. Cl.: B26D 7/06, B26D 7/18

(54) **Vorrichtung und Verfahren zum Portionieren eines Lebensmittelstücks**
Apparatus and method for portioning food
Dispositif ainsi que procédé pour débiter un produit alimentaire

(30) Priorität: 05.02.2003 DE 10304773
(43) Veröffentlichungstag der Anmeldung: 11.08.2004
(73) Patentinhaber: Maja-Maschinenfabrik Hermann Schill GmbH & Co. KG, 77694 Kehl-Goldscheuer (DE)
(72) Erfinder: Schill, Joachim, 77694 Kehl (DE); Illch, Hartmut, 77694 Kehl (DE)
(74) Vertreter: Lucht, Silvia

(56) Entgegenhaltungen:
- EP-A- 0 672 587
- DE-A- 19 735 597
- DE-C- 513 890
- DE-C- 4 108 605
- DE-U- 29 513 043
- GB-A- 2 157 945
- US-A- 3 434 519
- US-E- R E32 592

## Beschreibung

### Stand der Technik

Die Erfindung geht aus von einer Vorrichtung und einem Verfahren zum Portionieren eines Lebensmittelstücks nach dem Oberbegriff des Anspruchs 1 und des Anspruchs 19. Gattungsgebend ist die GB-A-2 157 945.

Derartige Vorrichtungen werden eingesetzt, um Lebensmittel in Portionen oder Scheiben gleichen Gewichts oder gleicher Dicke aufzuschneiden. Zu den Lebensmitteln zählen beispielsweise frisches gewachsenes Fleisch, Wurst, Schinken Käse, Gemüse oder Backwaren. Bekannte Vorrichtungen zum Aufschneiden von Wurst oder Käse werden auch als Slicer bezeichnet.

Portioniervorrichtungen für frisches gewachsenes Fleisch werden beispielsweise in Großküchen und bei der Herstellung vom zusammengestellten und abgepackten Menüs eingesetzt. Von einem Stück frischem, gewachsenem Fleisch oder einem anderen Lebensmittelstück werden einzelne Portionen, insbesondere Schnellbratstücke, wie Schnitzel, Steaks oder Medaillons abgetrennt. Dabei kommt es darauf an, dass die einzelnen Portionen ein vorgegebenes Gewicht und gegebenenfalls eine vorgegebene Dicke aufweisen. Die Scheiben müssen möglichst exakt portioniert sein, damit sie in ihrer Garzeit übereinstimmen, die einzelnen Portionen nicht zu unterschiedlich sind und das Gewicht auf einer vorgedruckten Packung angegeben werden kann.

Aus dem Stand der Technik der DE 197 35 597 A1 ist eine Vorrichtung zum Portionieren eines Fleischstücks bekannt, bei dem das Fleischstück in einer Einlegekammer mit Hilfe eines Presstempels zusammengepresst und in eine Portionierkammer gedrückt wird. Dabei wird die gesamte Portionierkammer mit Fleisch ausgefüllt. Anschließend wird die in der Portionierkammer befindliche Portion mit Hilfe eines Messers von dem Fleischstück abgetrennt und die Portion aus der Portionierkammer entfernt. Hierzu wird die Portionierkammer aus einer ersten Position in Verlängerung der Einlegekammer in eine Auswurfposition geschwenkt oder verschoben. Dieser Vorgang wird so oft wiederholt, bis das gesamte Fleischstück in gleiche Portionen aufgeteilt ist. Als nachteilig erweist sich bei diesem bekannten Stand der Technik, dass die Anzahl der pro Zeiteinheit abgetrennten Portionen gering ist. So kann die Portionierkammer erst dann wieder befüllt werden, wenn die abgetrennte Portion aus der Portionierkammer entfernt worden ist. Darüber hinaus kann die Einlegekammer erst dann wieder mit einem zweiten Lebensmittelstück befüllt werden, wenn das erste Lebensmittelstück vollständig in Portionen aufgeteilt worden ist und der Presstempel in seine Ausgangslage zurückgeführt wurde. Während des erneuten Befüllens der Einlegekammer steht die Portioniervorrichtung still. Ein schneller Ablauf der Portionierung ist jedoch in der Lebensmittelverarbeitung notwendig, da die abgetrennten Portionen häufig durch zusätzliche Maschinen weiter bearbeitet werden müssen. Abgetrennte Fleischportionen werden beispielsweise paniert. Läuft der Paniervorgang wesentlich schneller ab als das Portionieren, so wird der gesamte Prozess der Fleischbearbeitung durch das Portionieren verzögert.

Darüber hinaus weist diese bekannte Vorrichtung den Nachteil eines großen Baumasses auf. Das die Vorrichtung umgebende Gehäuse sollte aus Sicherheitsgründen so konzipiert sein, dass es den sich verschiebenden Presstempel und die verschwenk- oder verschiebbare Portionierkammer in jeder beliebigen Position umschließt. Selbst wenn das Gehäuse dieser Voraussetzung nicht genügt, so müssen die Verschiebewege der Teile der Vorrichtung bei deren Aufstellen berücksichtigt werden. In jedem Fall beansprucht die Vorrichtung einen großen Raum.

### Die Erfindung und ihre Vorteile

Die Erfindung wird in den Ansprüchen 1 und 19 definiert.

Demgegenüber hat die erfindungsgemäße Vorrichtung mit den Merkmalen des Anspruchs 1 den Vorteil, dass eine drehbare Einlegetrommel vorgesehen ist. Dabei enthält die Einlegetrommel eine oder mehrere Einlegekammern. Eine erste Einlegekammer der Einlegetrommel kann mit einem Lebensmittelstück befüllt werden, während ein in einer zweiten Einlegekammer befindliches Lebensmittelstück portioniert wird. Sobald das Lebensmittelstück der zweiten Einlegekammer vollständig in Portionen zerteilt wurde, kann die Portionierung des Lebensmittelstücks in der ersten Einlegekammer beginnen. Lange Stillstandszeiten der Vorrichtung während des Befüllens mit einem weiteren Lebensmittelstück sind damit ausgeschlossen.

Die Einlegekammern können parallel zueinander und zu der Achse der Einlegetrommel verlaufen. Darüber hinaus besteht die Möglichkeit, dass die Einlegekammern unter einem Winkel zueinander und zu der Achse der Einlegetrommel verlaufen. Die Einlegekammern können so in der Einlegetrommel angeordnet sein, dass eine Längsseite in axialer Richtung entlang des Umfangs der zylindrischen Einlegetrommel verläuft. Diese Längsseite ist nach außen offen, so dass ein Lebensmittelstück eingelegt werden kann. Ist das Befüllen der Einlegekammer abgeschlossen, so wird die offene Längsseite durch einen Deckel verschlossen. Der Deckel enthält eine Führung für den Kolben. Je nach Bedarf kann entweder ein Deckel mit Führung für alle Einlegekammern vorgesehen sein oder es können mehrere Deckel mit Führung an der Einlegetrommel angeordnet sein.

Nach der Erfindung ist an dem dem Kolben abgewandten Ende der Einlegetrommel eine um ihre Achse drehbar angeordnete Portioniertrommel vorgesehen, welche eine oder mehrere Portionierkammern enthält. Derartige Portionierkammern sind insbesondere zur gewichtsgenauen Portionierung von frischem gewachsenem Fleisch notwendig. Sie sorgen dafür, dass die von dem Lebensmittelstück abzutrennende Portion ein exakt vorgegebenes Volumen und damit ein exakt vorgegebenes Gewicht aufweisen. Da die Portioniertrommel mehrere Portionierkammern aufweist, können mehrere Vorgänge zeitgleich ablaufen. So kann beispielsweise die abgetrennte Portion aus einer der Portionierkammern entfernt werden, während eine andere Portionierkammer bereits wieder mit Fleisch befüllt wird. Hierzu wird die Portioniertrommel nach dem Abtrennen der Portion durch das Messer um einen Winkel gedreht. Es befindet sich daher eine leere Portionierkammer an der mit Fleisch befüllten Einlegekammer sobald das Messer gedreht oder verschoben wird und den Vorschub von Fleisch aus der Einlegekammer in die leere Portionierkammer ermöglicht. Durch das Drehen der Portioniertrommel wird die die abgetrennte Portion enthaltende Portionierkammer in eine Position gebracht, in der die Portionierkammer von außen zugänglich ist. In dieser Stellung kann die abgetrennte Portion ausgeworfen und abtransportiert werden.

Die Portionierkammern können in der Portioniertrommel in gleichen oder unterschiedlichen Winkelabständen angeordnet sein. Bei einer Rotation der Portioniertrommel um diese Winkelabstände wird eine noch leere Portionierkammer in eine Position an einer befüllten Einlegekammer gebracht. Gleichzeitig wird eine Portionierkammer mit einer abgetrennten Portion in eine Position überführt, in welcher die abgetrennte Portion ausgeworfen werden kann.

Der Querschnitt der an der Längsseite verschlossenen Einlegekammern ist entweder identisch mit dem oder geringfügig kleiner als der Querschnitt der Portionierkammern, so dass das Lebensmittelstück ungehindert von der Einlegekammer in die Portionierkammer gefördert werden kann.

Die erfindungsgemäße Vorrichtung hat den Vorteil eines geringen und kompakten Baumaßes. Während des Betriebs werden Einlegetrommel, Portioniertrommel und Messer lediglich gedreht. Sie beanspruchen daher keinen oder nur einen geringen über ihre Baumaße hinausgehenden Raum. Vorteilhafterweise wird der dem Zusammenpressen des Lebensmittelstücks in der Einlegekammer dienende Kolben über eine Führung und einen Antrieb bewegt, welche sich seitlich an der Einlegetrommel befinden. Ein Presstempel, der über eine aus der Einlegekammer herausragende Pleuel oder Platte angetrieben wird und damit einen zusätzlichen Raum zum Verschieben benötigt, ist im Unterschied zum Stand der Technik nicht vorgesehen.

Die Achse der Portioniertrommel kann koaxial, parallel oder unter einem Winkel zu der Achse der Einlegetrommel verlaufen. Dabei ist zu berücksichtigen, dass die Portionierkammern in der Portioniertrommel so positioniert sind, dass eine Portionierkammer durch Drehung der Portioniertrommel von einer ersten Position in Verlängerung einer Einlegekammer in eine zweite, für den Auswurf einer abgetrennten Portion geeignete Position überführt wird.

Nach einer weiteren vorteilhaften Ausgestaltung der Erfindung weisen die Portionierkammern an der der Einlegetrommel abgewandten Seite einen beweglich angeordneten Kammerboden auf. Zur Einstellung des Kammerbodens ist ein mechanisches Getriebe, ein elektromotorischer, pneumatischer oder hydraulischer Antrieb vorgesehen. Über den Kammerboden kann die Tiefe der Portionierkammern und damit das Volumen eingestellt werden. Auf diese Weise können mit der erfindungsgemäßen Vorrichtung Portionen unterschiedlicher Dicke und unterschiedlichen Volumens hergestellt werden. Sofern zusätzlich der Querschnitt der Portionen variiert werden soll, müssen die Einlegekammern und die Portionierkammern hinsichtlich ihres Querschnitts variabel sein. Die Kammern können als Einsätze ausgestaltet sein, welche in hierfür vorgesehene Schächte der Trommeln eingesetzt werden. Darüber hinaus kann vorgesehen sein, dass die Einlegetrommel und die Portioniertrommel durch andere Trommeln mit unterschiedlichem Querschnitt der Kammern ersetzt werden können.

Nach einer weiteren vorteilhaften Ausgestaltung der Erfindung ist ein zweites Getriebe oder ein zweiter Antrieb vorgesehen, welches des Kammerboden unmittelbar nach dem Abschneiden einer Portion verschiebt. Dazu wird der Kammerboden nachdem das Messer die Portion abgeschnitten hat und die Portionierkammer verschließt zunächst in eine Richtung bewegt, so dass er sich vom Messer entfernt. Dabei vergrößert sich das Volumen der Portionierkammer und das Messer wird entlastet. Beim Anschließenden Drehen der Portioniertrommel erfährt das in der Portionierkammer befindliche Stücke keine starken Reibungskräfte und wird daher an seiner Oberfläche nicht beschädigt. Befindet sich die Portionierkammer in Auswurfstellung so wird der Kammerboden in die entgegengesetzte Richtung verschoben, so dass sich das Volumen der Portionierkammer verkleinert. Dadurch wird die Portion aus der Portionierkammer ausgeworfen.

Nach einer weiteren vorteilhaften Ausgestaltung der Erfindung sind in dem Kammerboden der Portionierkammern Kanäle zum Zuführen und Absaugen von Luft vorgesehen. Die Portioniertrommel ist mit einem Medienversorgungsrohr ausgestattet, in welches die Kanäle münden. Um das Befüllen der Portionierkammern mit dem Lebensmittelstück zu unterstützen, wird die Luft in der Portionierkammer abgesaugt und damit ein Unterdruck erzeugt. Dadurch kann ausgeschlossen werden, dass die Portionierkammer nicht vollständig mit dem Lebensmittelstück befüllt wird und sich dadurch Abweichungen hinsichtlich des Volumens der einzelnen Portionen ergeben. Der Auswurf einer abgetrennten Portion aus der Portionierkammer wird durch die Zufuhr von Luft unterstützt. Durch die Einwirkung von Druckluft wird die abgetrennte Portion aus der Portionierkammer gedrückt. Dabei löst sich die Portion von dem Kammerboden, ohne dass Reste in der Portionierkammer verbleiben. Derartige Reste sollten vermieden werden, da sie einerseits zu einer Verunreinigung der Portionierkammern und andererseits zu Abweichungen des Volumens der einzelnen Portionen führen.

Nach einer weiteren vorteilhaften Ausgestaltung der Erfindung gibt das Messer in einer ersten Position eine Portionierkammer der Portioniertrommel frei um das Lebensmittelstück über den Kolben bis in die Portionierkammer zu pressen. Ist die Portionierkammern vollständig befüllt, so wird das Messer zum Abschneiden der in der Portionierkammer befindlichen Portion von dem Lebensmittelstück um einen Winkel α mit α kleiner 360° gedreht. Nun verschließt das Messer das dem Kolben abgewandte Ende der Einlegekammer, so dass das Lebensmittelstück nicht nachgeschoben werden kann. Die Portioniertrommel dreht sich um einen Winkel β. Erst wenn die Portioniertrommel um den Winkel β gedreht wurde und sich eine leere Portionierkammer in Verlängerung der Einlegekammer befindet, gibt das Messer die Einlegekammer frei, so dass das Lebensmittelstück über den Kolben in die Portionierkammer vorgeschoben werden kann. Durch diesen Ablauf wird die Reibung zwischen dem Messer und der Schnittoberfläche des Lebensmittelstücks sowie der Schnittoberfläche der abgetrennten Portion minimiert. Darüber hinaus wird die Zykluszeit minimiert.

Durch eine entsprechende Gestaltung der Geometrie des Messers und eine entsprechende Steuerung der Rotation von Portioniertrommel und Messer ist es möglich, die Portionen mit einem Schmetterlingsschnitt zu versehen oder mehrere Portionen in verschiedenen Portionierkammern während einer Messerumdrehung abzutrennen. Portionen mit einem Schmetterlingsschnitt eignen sich zur Herstellung von Cordon Bleu. Sie sind in der Mitte teilweise durchtrennt, um Käse und Schinken einfüllen zu können.

Nach einer weiteren vorteilhaften Ausgestaltung der Erfindung hat die Schneide des Messers einen gekrümmten Verlauf, so dass das Lebensmittelstück bei der Rotation des Messers durch einen ziehenden Schnitt durchtrennt wird. Damit können nicht nur weiche Lebensmittelstücke sondern auch Stücke von frischem gewachsenem Fleisch portioniert werden.

Nach einer weiteren vorteilhaften Ausgestaltung der Erfindung hat das drehbar gelagerte Messer die Form eines Kreisausschnitts mit einem Zentriwinkel zwischen 200° und 300°.

Nach einer weiteren vorteilhaften Ausgestaltung der Erfindung ist für das Messer ein Antrieb vorgesehen, der das Messer in einer Richtung vorschiebt und zurückzieht. Die Schneide des Messers verläuft dabei unter einem Winkel gegen die Bewegungsrichtung wie bei einem Fallbeil, so dass das Lebensmittelstück mit einem ziehenden Schnitt durchtrennt werden kann.

Das erfindungsgemäße Verfahren sorgt dafür, dass der Portioniervorgang schnell und unproblematisch abläuft. Insbesondere werden der Transport und das Auswerfen der abgetrennten Portion beschleunigt und vereinfacht.

Weitere Vorteile und vorteilhaften Ausgestaltung der Erfindung sind der nachfolgenden Beschreibung, der Zeichnung und den Ansprüchen zu entnehmen.

### Zeichnung

In der Zeichnung ist ein Ausführungsbeispiel der Erfindung dargestellt. Es zeigen:
- Figur 1: Vorrichtung zum Portionieren in perspektivischer Ansicht mit geöffneter Einlegekammer,
- Figur 2: Vorrichtung gemäß Figur 1 im Schnitt,
- Figur 3: Vorrichtung gemäß Figur 1 und 2 in einer Ansicht von hinten,
- Figur 4: Vorrichtung gemäß Figur 2 im Schnitt in kleinerem Maßstab,
- Figur 5: Schnitt durch die Vorrichtung gemäß Figur 2 an der in Figur 4 mit A-A markierten Stelle,
- Figur 6: Schnitt durch die Vorrichtung gemäß Figur 4 an der in Figur 2 mit B-B markierten Stelle.

### Beschreibung des Ausführungsbeispiels

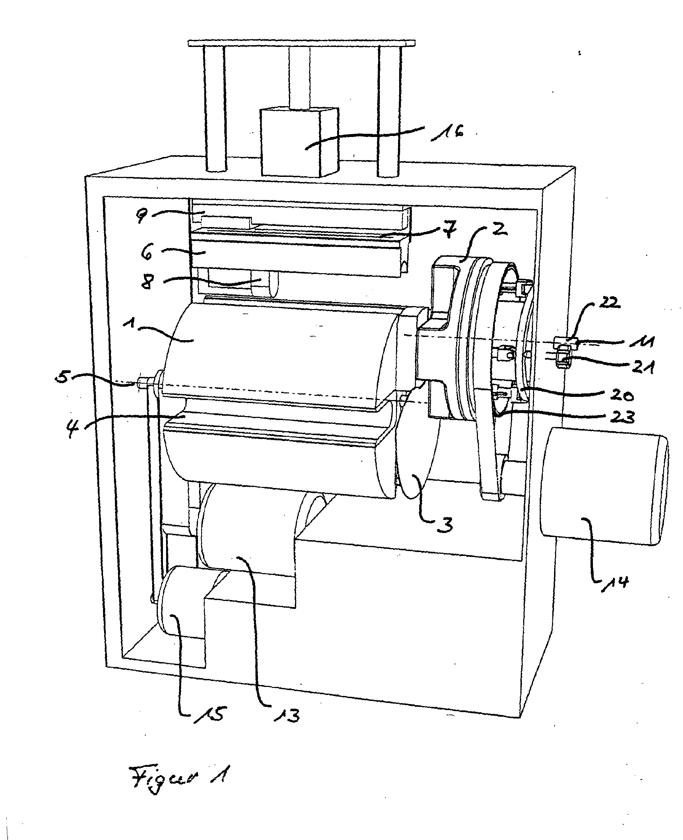

In den Figuren 1, 2 und 3 ist eine Vorrichtung zum Portionieren von frischem gewachsenem Fleisch mit einer Einlegetrommel 1, einer Portioniertrommel 2 und einem Messer 3 dargestellt. Die Einlegetrommel 1 hat die Form eines Zylinders und weist vier Einlegekammern 4 auf, von denen in Figur 1 zwei erkennbar sind. Die Einlegekammern 4 sind parallel zueinander und zur Achse 5 der Einlegetrommel 1 angeordnet. Dabei verläuft eine Längsseite in axialer Richtung entlang des Umfangs der zylindrischen Einlegetrommel 1. Diese Längsseite ist nach außen offen und wird durch einen Deckel 6 verschlossen. Der Deckel enthält eine Führung 7 für den Kolben 8. Der Kolben wird über den Antrieb 9 schrittweise oder kontinuierlich bewegt. Er befindet sich ebenfalls an dem Deckel 6. Über den Antrieb 9 und die Führung 7 wird der Kolben 6 in axialer Richtung bewegt. Dabei wird auf ein in die Einlegekammer 4 eingelegtes Stück Fleisch eine Kraft ausgeübt, die dafür sorgt, dass das Fleisch den in der durch den Deckel 6 verschlossenen Einlegekammer 4 zur Verfügung stehenden Raum vollständig ausfüllt und in Richtung der Portioniertrommel 2 vorgeschoben wird. Um das Fleisch bereits vor Beginn des Portioniervorganges zu pressen und um zu verhindern, dass das Fleisch durch die Kraft des Kolbens in axialer Richtung gefaltet wird, wird das Fleisch durch den Deckel 6 in die Einlegekammer gedrückt. Das Fleischstück erfährt damit in der Einlegekammer Kräfte aus mehreren Richtungen.

Die Einlegekammern 4 sind als Einsatz ausgebildet, der in hierfür an der Einlegetrommel 1 vorgesehene Schächte eingesetzt wird. Damit können die Einlegekammern durch solche mit einem anderen Querschnitt ersetzt werden.

An der Einlegetrommel 1 ist für alle Einlegekammern 4 ein Kolben 8 und ein Deckel 6 mit Führung 7 und Antrieb 9 vorgesehen. Kolben 8 und Deckel 6 befinden sich an derjenigen Einlegekammer 4, welche das gerade zu portionierende Fleisch enthält.

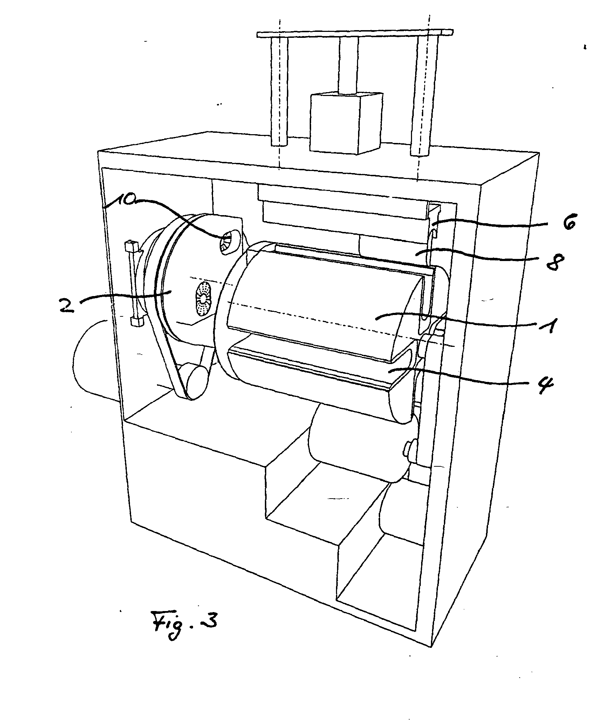

In der Portioniertrommel 2 sind vier Portionierkammern 10 vorgesehen, von denen zwei in Figur 3 erkennbar sind. Der Querschnitt der Portionierkammern 10 ist geringfügig größer als der Querschnitt der an ihren Längsseiten durch den Deckel 6 verschlossenen Einlegekammern 4. Es handelt sich um einen länglichen Querschnitt mit Rundungen. Die Achse 11 der Portioniertrommel 2 verläuft parallel zur Achse 5 der Einlegetrommel 1.

Zwischen der Einlegetrommel 1 und der Portioniertrommel 2 ist das Messer 3 drehbar angeordnet. Dabei verlaufen die Achse des scheibenartigen Messers 3 und die Achse 5 der Einlegetrommel 1 koaxial. Die Geometrie des Messers 3 ist an einen Kreisausschnitt angenähert. Die Schneide 12 des Messers 3 hat einen gekrümmten Verlauf und ist im Verhältnis zur übrigen Fläche des Messers konvex. Würde man die Schneide verlängern, so würde sich ein Spirale ergeben.

Die Einlegetrommel 1 wird über den Antrieb 13, die Portioniertrommel 2 über den Antrieb 14 und das Messer 3 über den Antrieb 15 zur Rotation angetrieben. Der Antrieb 16 sorgt dafür, dass der Deckel 6 mit dem Kolben 8 auf die Einlegekammer zu und von dieser wegbewegt wird.

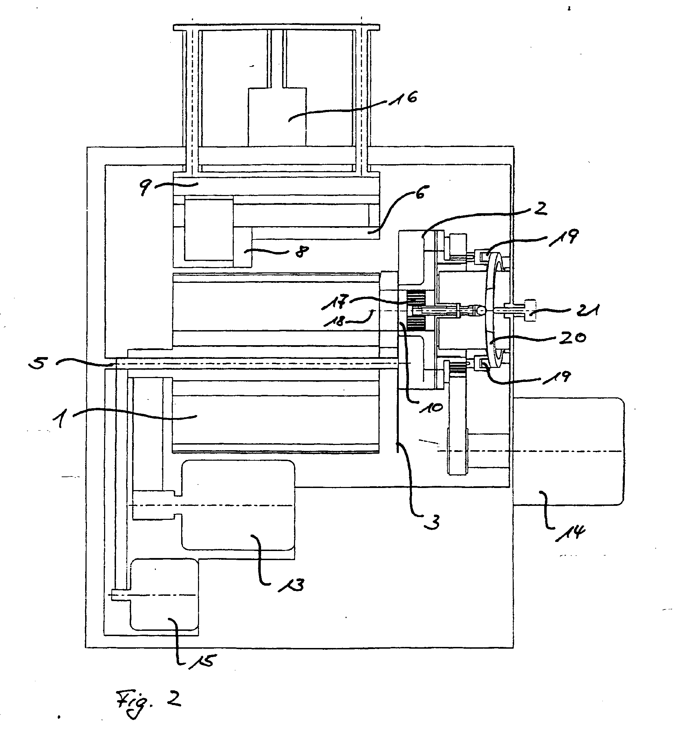

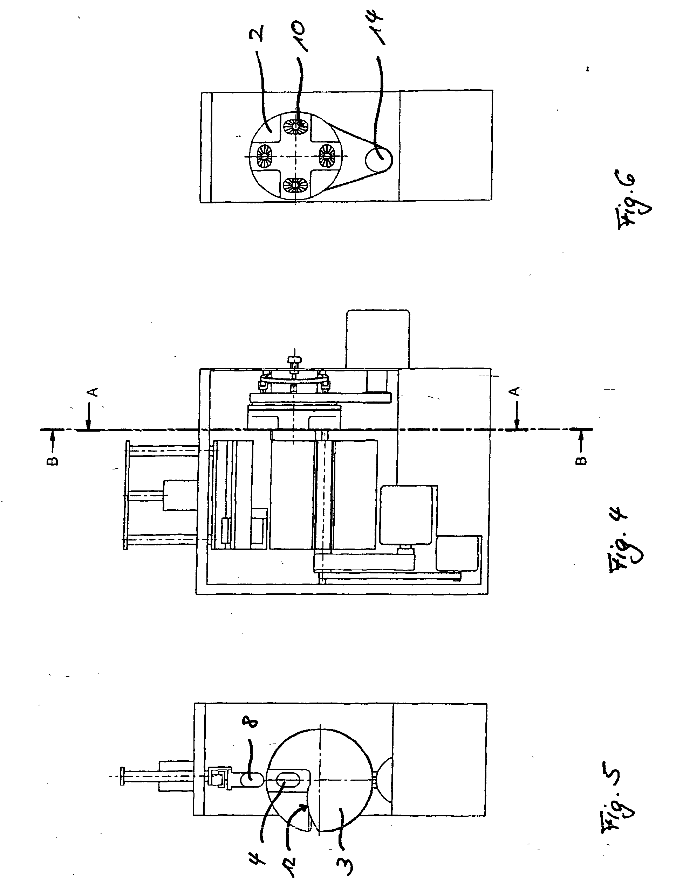

Figur 2 und 4 zeigen einen Längsschnitt durch die Vorrichtung. Die Figuren 5 und 6 zeigen einen Querschnitt an den mit A-A und mit B-B in Figur 4 markierten Stelle. Die Portionskammern 10 sind mit einem Kammerboden 17 ausgestattet, der über ein Getriebe verschoben werden kann. Der Kammerboden ist mit einer Achse 18 verbunden, welche über Laufrollen 19 an einer Kurvenscheibe 20 angreift. Die Einstellung des Kammerbodens 17 erfolgt manuell mit Hilfe der Stellschraube 21, welche ebenfalls an der Kurvenscheibe 20 angreift.

Ein Medienversorgungsrohr 22 ist mit in der Zeichnung nicht erkennbaren Kanälen in den Kammerböden 17 der Portionierkammern 10 verbunden. Über dieses Medienversorgungsrohr 22 wird den Portionierkammern Druckluft zugeführt oder Luft zur Erzeugung eines Unterdrucks abgesaugt.

Das Antriebsrad 23 dient dazu, die Portioniertrommel 2 zur Rotation anzutreiben. Der Antrieb 14 der Portioniertrommel 2, der Antrieb 15 des Messers 3 und gegebenenfalls der Antrieb 9 des Kolbens 8 müssen zeitlich aufeinander abgestimmt sein, um den Ablauf der Portionierung zu garantieren. Hierzu ist eine in der Zeichnung nicht dargestellte Steuerung vorgesehen. Der Antrieb der Einlegetrommel kann manuell oder durch einen Motor erfolgen. Auch dieser Antrieb beziehungsweise die Stellung der Einlegetrommel wird von der Steuerung erfasst.

Zum Portionieren eines Stücks Fleisch wird dieses in die Einlegekammer 4 der Einlegetrommel 1 eingelegt, welche in Figur 1 aus der Zeichenebene herausweist. Anschließend wird die Einlegekammer nach hinten gedreht, so dass sie unmittelbar an dem Deckel 6 mit dem Kolben 8 angeordnet ist. Dann wird die Einlegekammer mit dem Deckel 6 verschlossen. Dabei wird das Stück Fleisch entlang seiner Längsseite durch den Deckel 6 zusammengedrückt. Nun wird durch den Kolben 8 eine Kraft ausgeübt, die das Stück in Richtung der Portioniertrommel 2 schiebt. In Verlängerung der Einlegekammer 4 befindet sich eine Portionierkammer 10, in welche das Stück Fleisch gedrückt wird, bis das gesamte Volumen der Portionierkammer 10 durch das Fleisch ausgefüllt ist. Dieser Vorgang wird durch einen Unterdruck in der Portionierkammer unterstützt. Nun wird das Messer 3 gedreht und trennt dabei durch einen ziehenden Schnitt die in der Portionierkammer 10 befindliche Portion von dem übrigen Fleischstück ab. Jetzt verschließt das Messer 3 das dem Kolben abgewandte Ende der Einlegekammer, so dass das Fleischstück nicht nachgeschoben werden kann. Die Portioniertrommel dreht sich um einen Winkel von 90°. Erst wenn die Portioniertrommel 2 um 90° gedreht wurde und sich eine leere Portionierkammer 10 in Verlängerung der Einlegekammer 4 befindet, gibt das Messer 3 die Einlegekammer 4 frei, so dass das Fleischstück über den Kolben 8 in die Portionierkammer 10 vorgeschoben werden kann. Gleichzeitig wird die bereits abgetrennte Portion aus der anderen Portionierkammer ausgeworfen. Dieser Vorgang wird durch einen Überdruck in der Portionierkammer und durch eine Verschiebung des Kammerbodens unterstützt. Unmittelbar nachdem die in der Portionierkammer 10 befindliche Portion durch das Messer von dem Fleischstück abgetrennt wurde und das Messer die Portionierkammer in Richtung der Einlegekammer verschließt, wird der Kammerboden verschoben, so dass sich das Volumen der Portionierkammer 10 geringfügig vergrößert. Dadurch wird das Messer entlastet. Beim Drehen der Portioniertrommel treten damit zwischen der abgetrennten Portion und dem Messer geringere Reibungskräfte auf und die Oberfläche der Portion wird nicht aufgerissen. Sobald sich die Portionierkammer in der Auswurfposition befindet wird der Kammerboden 17 in die entgegengesetzte Richtung bewegt, so dass sich das Volumen der Portionierkammer verkleinert. Dadurch wird der Auswurf der Portion aus der Portionierkammer unterstützt. Die Verschiebung des Kammerbodens 17 während des Transports und dem Auswurf der abgetrennten Portion wird durch die Kurvenscheibe 20 erzielt. Diese ist in dem in den Figuren 2 und 4 erkennbaren Abschnitt schmaler als an dem gegenüberliegenden, in der Zeichnung nicht erkennbaren Abschnitt. Die durch die Stellschraube 21 eingestellte Position des Kammerbodens 17 ist nur während des Förderns des Fleisches in die Portionierkammer 10 fixiert.

Diese Schritte werden so oft wiederholt, bis das gesamte Fleischstück in Portionen zerteilt wurde. Gleichzeitig kann in eine weitere Einlegekammer 4 der Einlegetrommel 1 ein Fleischstück eingelegt werden, das unmittelbar nach Abschluss der Portionierung des ersten Fleischstücks in Portionen zerteilt wird. Der Transport der abgetrennten Fleischportionen kann beispielsweise über ein Transportband erfolgen. Die Einlegekammern können manuell oder maschinell befüllt werden.

### Bezugszahlen

- 1: Einlegetrommel
- 2: Portioniertrommel
- 3: Messer
- 4: Einlegekammer
- 5: Achse der Einlegetrommel
- 6: Deckel
- 7: Führung
- 8: Kolben
- 9: Antrieb des Kolbens
- 10: Portionierkammer
- 11: Achse der Portioniertrommel
- 12: Schneide des Messers
- 13: Antrieb der Einlegetrommel
- 14: Antrieb der Portioniertrommel
- 15: Antrieb des Messers
- 16: Antrieb des Deckels
- 17: Kammerboden
- 18: Achse des Kammerbodens
- 19: Laufrolle
- 20: Kurvenscheibe
- 21: Stellschraube
- 22: Medienversorgungsrohr
- 23: Antriebsrad

## Patentansprüche

1. Vorrichtung zum Portionieren eines Lebensmittelstücks in Portionen mit vorgegebenem Gewicht oder vorgegebener Dicke
mit mindestens einer länglichen Einlegekammer (4) zum Einlegen des Lebensmittelstücks,
mit einem axial von einem Ende her in die Einlegekammer (4) einführbaren Kolben (8) zum Zusammenpressen des Lebensmittelstücks in der Einlegekammer und zum schrittweisen oder kontinuierlichen axialen Vorschub,
mit einem beweglich an der Einlegekammer (4) angeordneten Messer (3) zum Abschneiden der aus der Einlegekammer herausragenden Portion von dem Lebensmifitelstück,
mit einer um ihre Achse (5) drehbar angeordneten Einlegetrommel wobei die Einlegekammer (4) oder die mehreren Einlegekammem (4) Teil der Einlegetrommel (1) sind,
**dadurch gekennzeichnet,**
**dass** an dem dem Kolben (8) abgewandten Ende der Einlegekammer (4) eine um ihre Achse (11) drehbar angeordnete Portioniertrommel (2) vorgesehen ist, welche eine oder mehrere Portionierkammem (10) enthält.

2. Portioniervorrichtung nach Anspruch 1, **dadurch gekennzeichnet, dass** in der Einlegetrommel (1) mehrere Einlegekammern (4) vorgesehen sind; welche parallel zueinander und zu der Achse (5) der Einlegetrommel oder unter einem Winkel zueinander und zu der Achse der Einlegetrommel verlaufen.

3. Vorrichtung nach Anspruch 1, **dadurch gekennzeichnet, dass** das Messer (3) zum Abschneiden der in der Portionierkammer (10) befindlichen Portion von dem Lebensmittelstück zwischen der Einlegetrommel (1) und der Portioniertrommel (2) vorgesehen ist.

4. Portioniervorrichtung nach Anspruch 3, **dadurch gekennzeichnet, dass** die Achse (11) der Portioniertrommel (2) koaxial, parallel oder unter einem Winkel zu der Achse (5) der Einlegetrommel (1) verläuft.

5. Portioniervorrichtung nach Anspruch 3 oder 4, **dadurch gekennzeichnet, dass** die Portionierkammer (10) an der der Einlegetrommel (1) abgewandten Seite einen beweglich angeordneten Kammerboden (17) aufweist, und dass zur Einstellung des Kammerbodens (17) ein erstes mechanisches Getriebe oder ein erster elektromotorischer, pneumatischer oder hydraulischer Antrieb vorgesehen ist.

6. Portioniervorrichtung nach Anspruch 5, **dadurch gekennzeichnet, dass** zur manuellen oder automatischen Einstellung der Position des Kammerbodens (17) ein Kurvenprofil (20), eine an dem Kurvenprofil angreifende Stellschraube (21) und eine die Bewegung des Kurvenprofils auf den Kammerboden übertragende Laufrolle (19) vorgesehen sind.

7. Portioniervorrichtung nach Anspruch 5 oder 6, **dadurch gekennzeichnet, dass** ein zweites mechanisches Getriebe oder ein zweiter elektromotorischer, pneumatischer oder hydraulischer Antrieb vorgesehen sind, welche den Kammerboden nach Beendigung des Schneidvorgangs in die vom Messer abgewandte erste Richtung bewegen um das Messer zu entlasten.

8. Portioniervorrichtung nach Anspruch 7, **dadurch gekennzeichnet, dass** das zweite Getriebe oder der zweite Antrieb vorgesehen sind, um den beweglichen Kammerboden der Portionierkammer in die zur ersten Richtung entgegengesetzte zweite Richtung zu bewegen und die Portion aus der Portionierkammer auszuwerfen.

9. Portioniervorrichtung nach Anspruch 7 oder 8, **dadurch gekennzeichnet, dass** das zweite Getriebe oder der zweite Antrieb Teil des ersten Getriebes oder des ersten Antriebs ist.

10. Portioniervorrichtung nach einem der Ansprüche 3 bis 9, **dadurch gekennzeichnet, dass** in dem Kammerboden (17) der Portionierkammern (10) Kanäle zum Zuführen und Absaugen von Luft vorgesehen sind, dass die Portioniertrommel (2) mit einem Medienversorgungsrohr (22) ausgestattet ist, in welches die Kanäle münden.

11. Portioniervorrichtung nach einem der Ansprüche 3 bis 10, **dadurch gekennzeichnet, dass** ein Rotationsantrieb für die Portioniertrommel und das Messer gemeinsam vorgesehen ist.

12. Portioniervorrichtung nach einem der vorhergehenden Ansprüche, **dadurch gekennzeichnet, dass** zum Verschieben des Kolbens (8) seitlich an der Einlegetrommel (1) eine Führung (7) und ein Antrieb (9) vorgesehen sind.

13. Portioniervorrichtung nach einem der vorhergehenden Ansprüche, **dadurch gekennzeichnet, dass** das Messer (3) an der Einlegetrommei oder zwischen der Einlegetrommel (1) und der Portioniertrommel (2) um eine Achse drehbar angeordnet ist, wobei die Achse parallel oder koaxial zur Achse (5) der Einlegetrommel (1) verläuft.

14. Portioniervorrichtung nach einem der vorhergehenden Ansprüche, **dadurch gekennzeichnet, dass** das Messer (3) eine Schneide (12) mit gekrümmtem Verlauf aufweist.

15. Portioniervorrichtung nach Anspruch 13 oder 14, dass das Messer (3) scheibenartig ist und die Form eines Kreisausschnitts aufweist, wobei der Zentriwinkel zwischen 200° und 300° beträgt.

16. Portioniervorrichtung nach einem der Ansprüche 1 bis 12, **dadurch gekennzeichnet, dass** ein Antrieb für das Messer vorgesehen ist, der das Messer in eine Richtung vorschiebt und zurückzieht, und dass das Messer eine Schneide aufweist, die unter einem Winkel gegen die Bewegungsrichtung des Messers verläuft.

17. Portioniervorrichtung nach einem Ansprüche 3 bis 15, **dadurch gekennzeichnet, dass** das Messer (3) in einer ersten Position eine Portionierkammer (10) der Portioniertrommel (2) freigibt um das Lebensmittelstück über den Kolben (8) bis in die Portionierkammer (8) zu pressen, und dass das Messer (3) in einer zweiten Position nach dem Abschneiden der in der Portionierkammer (10) befindlichen Portion die Einlegekammer (4) verschließt.

18. Portioniervorrichtung nach einem der vorhergehenden Ansprüche, **dadurch gekennzeichnet, dass** an oder in der Einlegekammer ein Messergatter zum Schneiden von Würfeln vorgesehen ist.

19. Verfahren zum Portionieren eines Lebensmittelstücks in Portionen mit vorgegebenem Gewicht oder vorgegebener Dicke, unter Einsatz einer Vorrichtung nach Anspruch 5, 6, 7, 8 oder 9, **gekennzeichnet durch** folgende Verfahrensschritte
dass das Lebensmittelstück in einer Einlegekammer (4) zusammengedrückt wird,
dass der Lebensmittelstück über einen Kolben (8) in eine Portionierkammer (10) gefördert wird,
dass die in der Portionierkammer (10) befindliche Portion des Lebensmittelstücks **durch** ein Messer (3) vom übrigen Lebensmittelstück abgetrennt wird, wobei das Messer (3) nach Beendigung des Schneidvorgangs die Portionierkammer (10) in Richtung der Einlegekammer (4) verschließt,
dass sich ein beweglicher Kammerboden (17) der Portionierkammer (10) in die vom Messer (3) abgewandte erste Richtung bewegt um das Messer zu entlasten,
dass die Portionierkammer (10) von der Einlegekammer (4) weg bewegt wird, und
dass die Portion aus der Portionierkammer (10) heraus befördert wird.

20. Verfahren nach Anspruch 16, **dadurch gekennzeichnet, dass** sich der bewegliche Kammerboden (17) der Portionierkammer (10) in die zur ersten Richtung entgegengesetzte zweite Richtung bewegt, um die Portion aus der Portionierkammer (10) auszuwerfen.

## Claims

1. Apparatus for the portioning of a piece of food into portions with a predetermined weight or a predetermined thickness
with at least one oblong insertion chamber (4) for the insertion of the piece of food,
with a piston (8) that can be inserted axially from one end into the insertion chamber (4) for the compression of the piece of food in the insertion chamber and for the gradual or continuous axial infeed,
with a knife (3) arranged in a movable manner on the insertion chamber (4) for cutting the portion protruding from the insertion chamber from the piece of food,
with an insertion drum arranged in such a manner that it can be rotated around its axis (5) whereby the insertion chamber (4) or several insertion chambers (4) are part of the insertion drum (1),
**characterised in that**
the end of the insertion chamber (4) turned away from the piston (8) is provided with a portioning drum (2) arranged in a rotatable manner around its axis (11) that contains one or more portioning chambers (10).

2. Portioning apparatus in accordance with claim 1, **characterised in that** several insertion chambers (4), which run parallel to each other and to the axis (5) of the insertion drum or at an angle to each other and to the axis of the insertion drum, are provided in the insertion drum (1).

3. Apparatus according to claim 1, **characterised in that**
the knife (3) for cutting the portion located in the portioning chamber (10) from the piece of food is provided between the insertion drum (1) and the portioning drum (2).

4. Portioning apparatus in accordance with claim 3, **characterised in that** the axis (11) of the portioning drum (2) runs coaxial, parallel or at an angle to the axis (5) of the insertion drum (1).

5. Portioning apparatus in accordance with claim 3 or 4, **characterised in that** the portioning chamber (10) has a chamber floor (17) arranged in a movable manner on the side turned away from the insertion drum (1) and **in that** a first mechanical gear unit or a first electromotor, pneumatic or hydraulic power unit is provided for the setting of the chamber floor (17).

6. Portioning apparatus in accordance with claim 5, **characterised in that** a curve profile (20), an adjusting screw (21) touching the curve profile, and a track roller (19) transferring the movement of the curve profile to the chamber floor are provided for the manual or automatic setting of the position of the chamber floor (17).

7. Portioning apparatus in accordance with claim 5 or 6, **characterised in that** a second mechanical gear unit or a second electromotor, pneumatic or hydraulic power unit is provided that moves the chamber floor in the first direction turned away from the knife after the completion of the cutting procedure, in order to release the knife.

8. Portioning apparatus in accordance with claim 7, **characterised in that** the second gear unit or the second power unit is provided in order to move the moveable chamber floor of the portioning chamber in the opposite second direction and to eject the portion from the portioning chamber.

9. Portioning apparatus in accordance with claim 7 or 8, **characterised in that** the second gear unit or the second power unit is part of the first gear unit or the first power unit.

10. Portioning apparatus in accordance with one of claims 3 to 9, **characterised in that** the channels for supplying and removing air are provided in the chamber floor (17) of the portioning chambers (10) and **in that** the portioning drum (2) is equipped with a media supply tub (22) into which the channels flow.

11. Portioning apparatus in accordance with one of claims 3 to 10, **characterised in that** a rotation drive is provided for both the portioning drum and the knife.

12. Portioning apparatus in accordance with one of the previous claims, **characterised in that** a feed (7) and a power unit (9) are provided on the side of the insertion drum (1) for the movement of the piston (8).

13. Portioning apparatus in accordance with one of the previous claims, **characterised in that** the knife (3) is arranged in a rotatable manner around an axis on the insertion drum or between the insertion drum (1) and the portioning drum (2), whereby the axis runs parallel or coaxial to the axis (5) of the insertion drum (1).

14. Portioning apparatus in accordance with one of the previous claims, **characterised in that** the knife (3) has a cutting edge (12) with a curved gradient.

15. Portioning apparatus in accordance with claim 13 or 14, **characterised in that** the knife (3) is disc-like and has the form of a section of a circle, whereby the central angle is between 200° und 300°.

16. Portioning apparatus in accordance with one of claims 1 to 12, **characterised in that** a power unit is provided for the knife that pushes and retracts the knife in a direction and **in that** the knife has a cutting edge that runs at an angle against the knife's direction of motion.

17. Portioning apparatus in accordance with one of claims 3 to 15, **characterised in that** the knife (3) in a first position releases a portioning chamber (10) of the portioning drum (2) in order to press the piece of food over the piston (8) and into the portioning chamber (8) and **in that** the knife (3) locks the insertion chamber (4) in a second position after the cutting of the portion located in the portioning chamber (10).

18. Portioning apparatus in accordance with one of the previous claims, **characterised in that** a knife gate is provided on or in the insertion chamber for the cutting of cubes.

19. Method for the portioning of a piece of food into portions with a predetermined weight or a predetermined thickness, under the use of an apparatus in accordance with claim 5, 6, 7, 8, or 9, **characterised** through the following method steps
**in that** the piece of food is compressed in an insertion chamber (4),
**in that** the piece of food is conveyed over a piston (8) into a portioning chamber (10),
**in that** the portion of food located in the portioning chamber (10) is cut from the remaining piece of food by a knife (3), whereby the knife (3) locks the portioning chamber (10) in the direction of the insertion chamber (4) after the completion of the cutting procedure,
**in that** a moveable chamber floor (17) of the portioning chamber (10) is moved in the first direction away from the knife (3) in order release the knife,
**in that** the portioning chamber (10) is moved away from the insertion chamber (4), and
**in that** the portion is carried out of the portioning chamber (10).

20. Method in accordance with claim 16, **characterised in that** the movable chamber floor (17) of the portioning chamber (10) is moved in the opposite second direction to the first direction in order to eject the portion from the portioning chamber (10).

## Revendications

1. Dispositif pour débiter un produit alimentaire en portions d'un poids prescrit ou d'une épaisseur prescrite
avec au minimum une chambre d'insertion longitudinale (4) où l'on dépose le produit alimentaire,
avec un piston (8) pénétrant de manière axiale dans la chambre d'insertion (4) depuis l'une de ses extrémités afin de comprimer le produit alimentaire dans la chambre d'insertion en décrivant une translation axiale progressive ou continue,
avec un couteau (3) mobile placé contre la chambre d'insertion (4) et permettant de débiter la portion du produit alimentaire sortant de la chambre d'insertion,
avec un tambour d'insertion placé de façon à ce qu'il puisse tourner autour de son axe (5), la chambre d'insertion (4) ou les diverses chambres d'insertion (4) faisant partie intégrante du tambour d'insertion (1),
dispositif **caractérisé par le fait,**
**qu'**à l'extrémité de la chambre d'insertion (4) opposée au piston (8) est prévu un tambour à débiter placé de façon à ce qu'il puisse tourner autour de son axe (11) et qui comporte une ou plusieurs chambres de débitage (10).

2. Dispositif de débitage selon la revendication 1, **caractérisé par le fait que**, dans le tambour d'insertion (1), sont prévues plusieurs chambres d'insertion (4) qui sont placées parallèlement les unes par rapport aux autres et par rapport à l'axe (5) du tambour d'insertion ou selon un angle déterminé et par rapport à l'axe du tambour d'insertion.

3. Dispositif selon la revendication 1, **caractérisé par le fait que**
le couteau (3) servant à découper la portion du produit alimentaire qui se trouve dans la chambre de débitage (10) est monté entre le tambour d'insertion (1) et le tambour de débitage (2).

4. Dispositif de débitage selon la revendication 3, **caractérisé par le fait que** l'axe (11) du tambour de débitage (2) est placé de manière coaxiale, parallèle ou selon un angle déterminé par rapport à l'axe (5) du tambour d'insertion (1).

5. Dispositif de débitage selon la revendication 3 ou 4, **caractérisé par le fait que** la chambre de débitage (10) comporte, du côté opposé au tambour d'insertion (1), un fond de chambre mobile (17) et que, pour le réglage du fond de chambre (17), est prévu un premier engrenage mécanique ou un premier entraînement électromotorisé, pneumatique ou hydraulique.

6. Dispositif de débitage selon la revendication 5, **caractérisé par le fait que**, pour le réglage manuel ou automatique de la position du fond de chambre (17), sont prévus un profil incurvé (20), une vis de réglage (21) qui attaque le profil incurvé et un galet de roulement (19) qui transmet le mouvement du profil incurvé au fond de chambre.

7. Dispositif de débitage selon la revendication 5 ou 6, **caractérisé par le fait qu'**un second engrenage mécanique ou un second entraînement électromotorisé, pneumatique ou hydraulique sont prévus, qui, une fois le processus de découpage terminé, déplacent le fond de chambre dans la première direction opposée au couteau afin de diminuer les sollicitations subies par le couteau.

8. Dispositif de débitage selon la revendication 7, **caractérisé par le fait que** le second engrenage ou le second entraînement sont prévus pour déplacer le fond de chambre mobile de la chambre à débiter dans la seconde direction opposée à la première direction et pour rejeter la portion de la chambre de débitage.

9. Dispositif de débitage selon la revendication 7 ou 8, **caractérisé par le fait que** le second engrenage ou le second entraînement font partie intégrante du premier engrenage ou du premier entraînement.

10. Dispositif de débitage selon les revendications 3 à 9, **caractérisé par le fait que** sont prévus, dans le fond de chambre (17) des chambres de débitage (10), des canaux destinés à l'arrivée et à l'aspiration de l'air de sorte que le tambour de débitage (2) soit équipé d'un tube d'alimentation en médias (22) dans lequel débouchent les canaux.

11. Dispositif de débitage selon les revendications 3 à 10, **caractérisé par le fait qu'**un entraînement à rotation est prévu en commun pour le tambour de débitage et le couteau.

12. Dispositif de débitage selon l'une des revendications précédentes, **caractérisé par le fait que** sont prévus, sur les côtés du tambour d'insertion (1), un guidage (7) et un entraînement (9) pour la translation du piston (8).

13. Dispositif de débitage selon l'une des revendications précédentes, **caractérisé par le fait que** le couteau (3) est placé de façon à pouvoir tourner autour d'un axe contre le tambour d'insertion ou entre le tambour d'insertion (1) et le tambour de débitage (2), l'axe se déroulant de manière parallèle ou coaxiale par rapport à l'axe (5) du tambour d'insertion.

14. Dispositif de débitage selon l'une des revendications précédentes, **caractérisé par le fait que** le couteau (3) est doté d'une lame (12) courbée.

15. Dispositif de débitage selon la revendication 13 ou 14, **caractérisé par le fait que** le couteau (3) est en forme de disque et présente la forme d'une découpe circulaire, l'angle de centrage étant compris entre 200° et 300°.

16. Dispositif de débitage selon l'une des revendications 1 à 12, **caractérisé par le fait qu'**est prévu, pour le couteau, un entraînement qui fait avancer et reculer le couteau dans une direction et que le couteau est doté d'une lame qui tourne selon un angle donné contre le sens de mouvement.

17. Dispositif de débitage selon l'une des revendications 3 à 15, **caractérisé par le fait que** le couteau (3), dans une première position, libère une chambre de débitage (10) du tambour de débitage (2) afin de presser le produit alimentaire à l'aide du piston (8) jusque dans la chambre de débitage (8) et que le couteau (3), dans une seconde position, après le découpage de la portion se trouvant dans la chambre de débitage (10), ferme la chambre d'insertion (4).

18. Dispositif de débitage selon l'une des revendications précédentes, **caractérisé par le fait qu'**une grille de coupe destinée au débitage de cubes est montée contre ou dans la chambre d'insertion.

19. Procédé pour débiter un produit alimentaire en portions d'un poids prescrit ou d'une épaisseur prescrite, avec utilisation d'un dispositif selon la revendication 5, 6, 7, 8 ou 9, **caractérisé par le fait,**
**que** le produit alimentaire est pressé dans une chambre d'insertion (4),
**que** le produit alimentaire est transporté par un piston (8) dans une chambre de débitage (10),
**que** la portion du produit alimentaire se trouvant dans la chambre de débitage (10) est séparée par un couteau (3) du reste du produit alimentaire, le couteau (3) fermant, après l'achèvement du processus de découpage, la chambre de débitage (19) en direction de la chambre d'insertion (4),
**qu'**un fond de chambre mobile (17) de la chambre de débitage (10) se déplace dans le premier sens opposé au couteau (3) afin de diminuer les sollicitations subies par le couteau,
**que** la chambre de débitage (10) s'éloigne de la chambre d'insertion (4), et
**que** la portion est éjectée de la chambre de débitage (10).

20. Procédé selon la revendication 16, **caractérisé par le fait que** le fond de chambre mobile (17) de la chambre de débitage (10) se déplace dans la seconde direction opposé à la première direction afin d'éjecter la portion de la chambre de débitage (10).
